# EUROPEAN PATENT APPLICATION

(11) **EP 0 836 964 A2**
(43) Date of publication of application: **22.04.1998**
(21) Application number: 97308332.2
(22) Date of filing: 21.10.1997
(51) Int. Cl.: B60P 1/04

(54) **A dumper vehicle**

(30) Priority: 21.10.1996 GB 9621863
(71) Applicant: THWAITES LIMITED, Warwickshire CV32 7NQ (GB)
(72) Inventor: Williams, Peter, Leamington Spa, CV32 7NQ (GB)
(74) Representative: Adkins, Michael

(57) **Abstract**

A dumper vehicle (10) having a slewable load carrying skip (26) and a locking device (63), shown in Fig 2, for resisting oscillatory movement of the skip (26) about its axis of slewing (49) when the skip (26) is arranged in a slewed position, the locking device (63) comprising a resiliently biased locking member (62) and engagement means with which the resiliently biased locking member (62) is engageable when the skip (26) is in said slewed position. A roller (78) carried by the resiliently biased locking member (62) is engageable with a cam-like member (92) to effect locking of the skip (26) in the slewed position. The resiliently biased locking member (62) is carried by a rotary member (22) upon which the skip (26) is mounted, with the engagement means being carried by an adjacent non-rotary part (12) of the vehicle (10). In use, as the resiliently biased locking member (62) rides over the cam-like member (92) the locking member (62) is urged against its resilient bias, the resilient bias finally causing the locking member (62) to enter a recess (100) defined in the cam-like member (92) when the skip (26) arrives at its slewed position.

## Description

The invention relates to a dumper vehicle and is particularly concerned with a dumper comprising a chassis having thereon a slewable load carrying skip.

Dumper vehicles for use, say, on building sites, frequently have a slewable load carrying skip. In such a case, the skip is rotatably mounted on a chassis for horizontal rotary movement, referred to herein as "slewing", about a vertical axis. Over the years, various arrangements have been proposed for effecting slewing of the skip and one such arrangement is described in our UK Patent Application number 9514847.4. In that application, the use of hydraulic rams is described for effecting slewing of the skip and the arrangement described therein has proved to be most effective. When the skip is positioned, say, in its straight ahead position a certain amount of oscillatory movement of the skip can sometimes occur about the vertical axis of slewing particularly when the vehicle is being driven over rough terrain. Generally such oscillation is usually only slight and is generally acceptable to the user of the vehicle. Such oscillation results from inherent flexibility or backlash in the arrangement used for slewing the skip and whilst various manufacturers of dumpers have tried to address the problem of skip oscillation, no particularly satisfactory solution has hitherto been devised.

According to the present invention there is provided a dumper vehicle having a slewable load carrying skip and a locking device for resisting oscillatory movement of the skip about its axis of slewing when the skip is arranged in a given slewed position, the locking device comprising a resiliently biased locking member and engagement means with which the locking member is engageable when the skip is in said position.

Such a locking device enables the skip to be locked particularly securely in the given slewed position in a simple yet effective way.

Preferably the engagement means defines a locking means for receiving the locking member.

Preferably, the engagement means comprises a cam-like member over which the locking member rides as the skip is slewed towards its given position. Preferably the cam-like member defines or leads to the recess in which the locking member locates in said given slewed position. As the locking member rides over the cam-like member, the locking member is preferably urged against its resilient bias whereby the resilient bias finally causes the locking member to enter the locking recess when the skip arrives at its given slewed position.

The cam-like member may comprise first and second ramps with the recess located therebetween. In that way, the skip can be slewed either clockwise or anticlockwise about its axis of slewing towards the given slewed position and the locking member will ride over one ramp or the other prior to entering the locking recess.

The locking member may carry a roller which rolls along the cam and which preferably locates in the locking recess in said given slewed position of the skip.

In a preferred embodiment the resiliently biased locking member is carried by a rotary member on which the skip is mounted and the engagement means is carried by an adjacent non-rotary part of the dumper vehicle.

Preferably, the resiliently biased locking member is arranged for movement in a radial direction against its resilient bias in relation to the axis of slewing.

The resilient bias may be in the form of a helical coil spring.

A dumper vehicle in accordance with the invention will now be described by way of example with reference to the accompanying drawings in which:
Figure 1 is an elevation of dumper vehicle in accordance with the invention;
Figure 2 is a fore and aft cross-section drawn to a larger scale through part of the dumper vehicle shown in figure 1 and illustrating the locking device;
Figure 3 is plan view of the locking device shown in figure 2 and
Fig 4 is an end view of a locking member shown in Fig 3 shown looking in the direction of arrow IV in Fig 3.

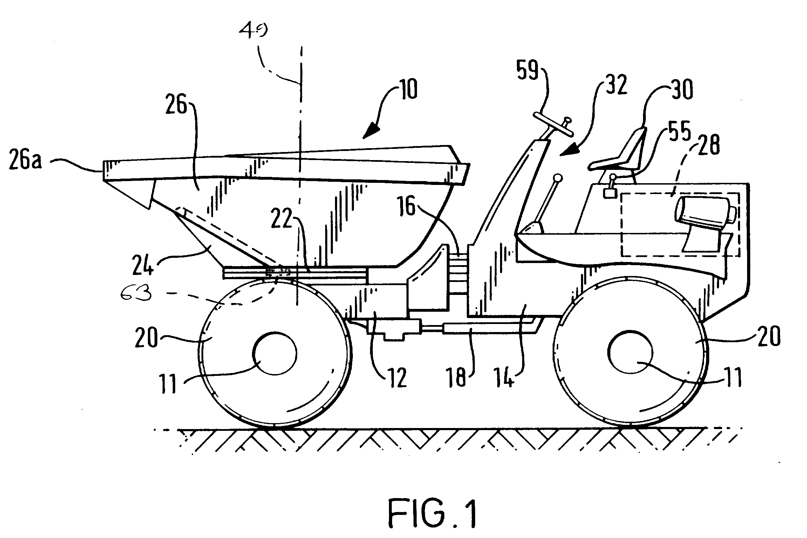

Referring to figure 1, a dumper vehicle 10 comprises front and rear chassis units 12, 14 respectively joined together by a pivotal interconnection of known kind generally indicated at 16. The interconnection 16 allows relative movement between the chassis units 12, 14 for steering and will also permit relative rolling movement therebetween. The chassis units 12, 14 can be slewed for steering by means of a steering ram 18. The front and rear chassis units 12, 14 are supported by respective axles 11 having wheels 20 thereon. The front chassis section 12 has a turntable 22 thereon, the turntable 22 having a pair of upwardly extending arms 24 which pivotally support a load carrying skip 26. Skip 26 can be raised for tipping and lowered by pivoting the skip forwardly on the arms 24 by means of a tipping ram (not shown). The rear chassis section 14 carries an engine 28 and a normal seat 30 and controls 32 for a driver.

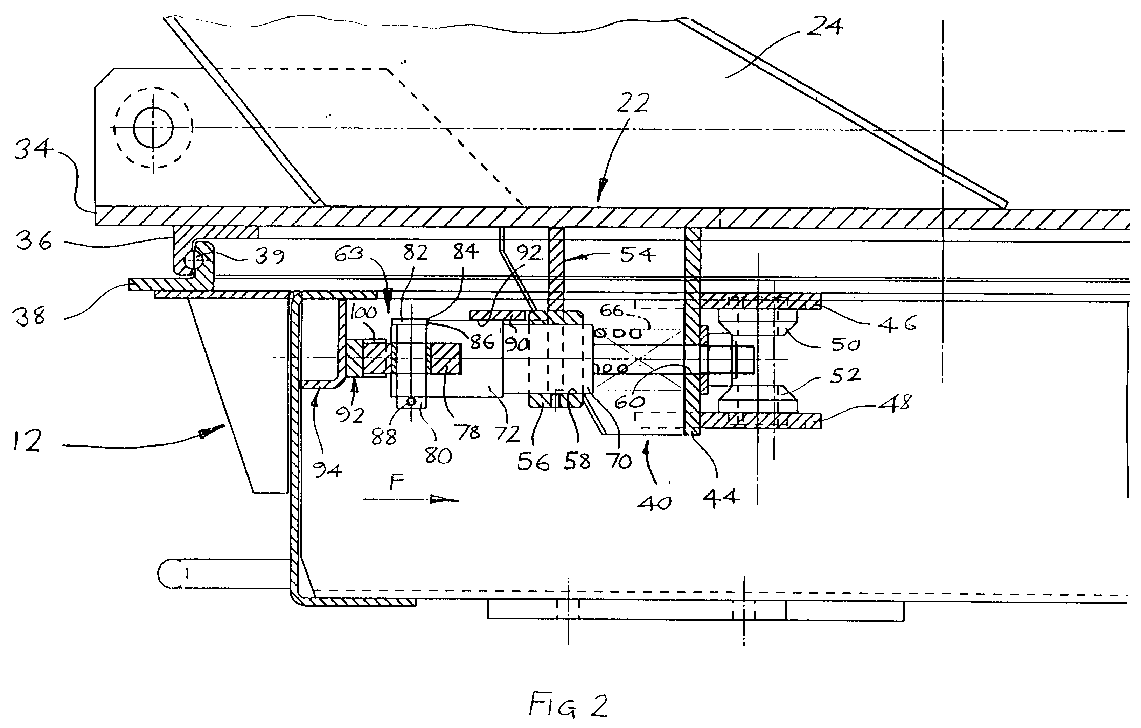

Referring now to figure 2, it can be seen that the turntable 22 comprises an upper bearing ring 36 carrying an upper section 34, and a lower bearing ring 38 carried by the front chassis unit 12. Bearings 39 are arranged between the two bearing rings 36, 38. The upper section 34 carries the upwardly extending arms 24 and a downwardly extending U-shaped member 40 having limbs 42 and a base 44.

The base 44 carries upper and lower spaced apart plates 46, 48 which carry respective upper and lower mountings 50, 52 for respective ends of hydraulic rams (not shown). The hydraulic rams are used to slew the skip 26 about a vertical axis of slewing 49 (see Fig 1) and the reader is directed to our Patent Application number 9514847.4 for details of the way in which the rams operate to effect slewing.

A downwardly extending plate 54 is carried by the upper section 34 and is secured between the two limbs 42, e.g. by welding. The plate 54 carries an annular boss 56 having a cylindrical bore 58 therethrough. The bore 58 is coaxial with a further bore 60 formed in the base 44 of the U-shaped member 40.

A locking member 62 of a locking device indicated generally at 63 is slidably mounted in the U-shaped member 40 and the plate 54 as will now be described. The locking member 62 is formed from an elongate bar of hexagon cross-section material. The material is machined to provide an elongate part 64 of circular cross-section. The elongate part 64 passes through a helical coil spring 66 and also passes through the bore 60 in the base 44 of the U-shaped member 40. The right hand end of the elongate part 64 is screw-threaded and carries a nut and washer arrangement 68. The spring 66 is preferably compressed between the base 44 and the right hand end of a cylindrical section 70 of the locking member 62 which passes slidably through the bore 58 in the boss 56. The hexagon cross-section remains intact where indicated at 72 but is machined away to provide a longitudinally extending horizontal slot 74 in which a roller 78 is positioned. The roller 78 is mounted on a pin 80 passing through the hexagon cross section 72. Pin 80 has a head 82 which is formed with a flat 84. The flat 84 lies adjacent a shoulder 86 formed on the locking member 62 to prevent rotation of the pin 80. The pin 80 is held in place by a split pin 88.

The plate 54 carries a horizontal anti-rotation plate 90 which extends across an upper flat 92 of the hexagon section 72 to prevent the locking member 62 rotating in the bores 58, 60.

As mentioned above, the spring 66 extends between the base 44 and the cylindrical section 70. An axial force applied to the locking member 62 in the direction of arrow F in figure 2 will displace the locking member 62 towards the base 44 provided that the force F is sufficiently strong to overcome the bias of the spring 66.

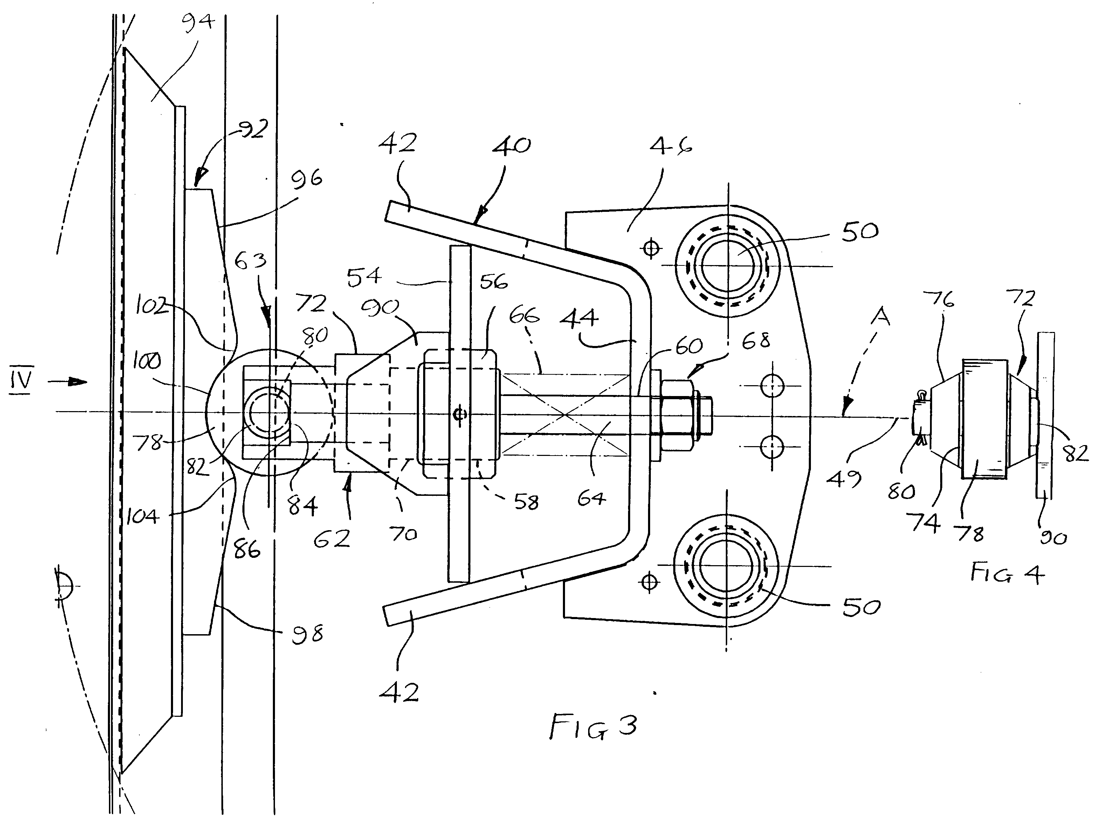

The locking device also includes a cam member 92 carried on a mounting 94 attached to the chassis section 12. The cam member 92 comprises first and second ramps 96, 98, the ramps terminating at a central recess 100. Intermediate respective curved surfaces 102, 104 are arranged between the recess 100 and the ramps 96, 98. The recess 100 is of complementary cylindrical shape to the roller 78. As shown in figure 3 the roller 78 is locatable in the recess 100. In the Figure 3 position of roller 78, a small gap (not shown) will normally be defined between the base 44 and the washer of the nut and washer arrangement 68.

In use, the locking member 62 has its axis arranged in the same vertical plane as a longitudinal axis of the vehicle indicated generally at A in figure 3. In that position, the skip 26 is in its straight ahead or central position as shown in figure 1 and the spring 66 urges the roller 78 firmly into the recess 100 thereby preventing any unwanted oscillating movement of the skip about the axis of slewing 49. When the user wishes to slew the skip 26, the hydraulic rams operate as described in our UK Patent Application number 9514847.4. In the present invention, operation of the rams causes the roller 78 to be urged over, say, the curved section 102 and on to the ramp 96, the roller finally disengaging the cam member 92 if the skip is slewed sufficiently far by the hydraulic rams. When the skip 26 is slewed in the opposite direction to return it to its straight ahead position, the hydraulic rams bring the roller 78 into contact with the ramp 96 and continued slewing movement causes the roller 78 to roll up the ram 96 thereby compressing the spring 66, the roller 78 eventually rolling over the curved surface 102 and into the recess 100 under the influence of the spring 66. The ramp 96 has a useful braking effect on the skip 26 as it is slewed back towards its straight ahead position which can be useful. The skip 26 can be slewed in the opposite direction in a similar manner.

The use of the locking device 63 is also particularly advantageous as a fail-safe feature. In the rare event that the slewing rams fail to operate then provided that the skip 26 is arranged in its straight ahead position, the locking member 62 cooperating with the recess 100 will hold the skip 26 in its straight ahead position thereby enabling the dumper vehicle to be used.

If desired, the locking device 63 or further such locking devices may be used to lock the skip in other slewed positions.

## Claims

1. A dumper vehicle having a slewable load carrying skip (26) and a locking device (63) for resisting oscillatory movement of the skip (26) about its axis of slewing (49) when the skip (26) is arranged in a slewed position, the locking device (63) comprising a resiliently biased locking member (62) and engagement means with which the resiliently biased locking member (62) is engageable when the skip (26) is in said slewed position.

2. The vehicle of claim 1 wherein the engagement means defines a locking means for receiving the resiliently biased locking member (62).

3. The vehicle of claim 1 or claim 2 wherein the engagement means is a cam-like member (92) over which the resiliently biased locking member (62) rides as the skip (26) is moved towards its slewed position.

4. The vehicle of claim 3 wherein the cam-like member (92) comprises first and second ramps (96,98) with a recess (100) located therebetween.

5. The vehicle of claim 4 wherein the resiliently biased locking member (62) includes a roller (78) which follows the cam-like member (92), the roller (78) locating in the recess (100) when the skip (26) is in the slewed position.

6. The vehicle of any preceding claim wherein the resiliently biased locking member (62) is carried by a rotary member (22) upon which the skip (26) is mounted, and the engagement means is mounted upon an adjacent non-rotary part (12) of the vehicle (10).

7. The vehicle of any preceding claim wherein the resiliently biased locking member (62) is arranged for movement against its resilient bias in a radial direction relative to the axis of slewing.

8. The vehicle of claim 7 wherein the resilient bias is provided by a helical spring (66).
